**Europäisches Patentamt**

**European Patent Office**

**Office européen des brevets**

(19)

(11) Veröffentlichungsnummer: **0 137 477**

**B1**

# (12) EUROPÄISCHE PATENTSCHRIFT

(45) Veröffentlichungstag der Patentschrift:
03.02.88

(21) Anmeldenummer: 84112001.7

(22) Anmeldetag: 06.10.84

(51) Int. Cl.⁴: **F 16 F 13/00**, B 60 K 5/12

(54) Zweikammer-Motorlager mit hydraulischer Dämpfung.

(30) Priorität: 11.10.83 DE 3336966

(43) Veröffentlichungstag der Anmeldung:
17.04.85 Patentblatt 85/16

(45) Bekanntmachung des Hinweises auf die Patenterteilung:
03.02.88 Patentblatt 88/5

(84) Benannte Vertragsstaaten:
AT BE DE FR GB IT NL SE

(56) Entgegenhaltungen:
EP-A-0 040 290
GB-A-2 041 496
US-A-2 535 080

PATENTS ABSTRACTS OF JAPAN, Band 6, Nr. 213
(M-167) 1091 , 26. Oktober 1982; & JP - A - 57 118 921
(NISSAN JIDOSHA K.K.) 24.07.1982

(73) Patentinhaber: METZELER KAUTSCHUK GMBH,
Gneisenaustrasse 15, D-8000 München 50 (DE)

(72) Erfinder: Härtel, Volker, Dr., Fichtenstrasse 50,
D-8034 Germering (DE)
Erfinder: Theisen, Dieter, Dr., Im Klosterfeld 10,
D-8044 Unterschleissheim (DE)

(74) Vertreter: Michelis, Theodor, Dipl.- Ing.,
Gneisenaustrasse 15, D-8000 München 50 (DE)

EP 0 137 477 B1

## Beschreibung

Die Erfindung betrifft ein Zweikammer-Motorlager mit hydraulischer Dämpfung, insbesondere für Kraftfahrzeuge, dessen flüssigkeitsgefüllte und gummielastische Umfangswände aufweisende Kammern über eine in einer Zwischenplatte vorgesehenen Leitung miteinander verbunden sind.

Ein derartiges Motorlager ist beispielsweise aus der DE-A-30 19 337 bekannt. Danach ist in der Zwischenplatte ein wendelförmiger Kanal vorgesehen, dessen Verhältnis von Länge zu Durchmesser größer als 4 sein soll, da erst ab einem solchen Verhältnis in einem Kanal mit Kreisquerschnitt eine laminare Strömung auftritt. Der Vorteil eines derartigen langen Kanals - im Gegensatz zu den früher allein üblichen Drosselöffnungen in der Zwischenplatte - besteht darin, daß die in dem Kanal stehende Flüssigkeitssäule praktisch als Tilgermasse wirkt und dadurch bei Schwingungen großer Amplitude und geringer Frequenz eine ausgezeichnete Dämpfungswirkung ausübt. Die größte Dämpfungswirkung tritt dabei dann auf, wenn die in dem Kanal gefangene Flüssigkeitssäule in Resonanz zur Erregerfrequenz kommt.

Das bedeutet also, daß ein wesentlicher Parameter für die zu erreichende Dämpfung die in dem Kanal enthaltene Flüssigkeitsmasse ist.

Der Erfindung liegt daher die Aufgabe zugrunde, ein Motorlager zu schaffen, dessen Dämpfungsvermögen noch weiter optimiert und mit einfachen Mitteln den jeweiligen Erfordernissen angepaßt werden kann.

Zur Lösung dieser Aufgabe ist ausgehend vom eingangs genannten Stand der Technik erfindungsgemäß vorgesehen, daß die Zwischenplatte im Bereich ihrer Mittelebene einen langgestreckten Hohlraum angenähert rechteckigen Längsschnitt aufweist, dessen Länge und Breite ein vielfaches seiner Höhe beträgt, und der über einen vertikalen Durchlaß an einem Ende mit der oberen Kammer und über einen entsprechenden Durchlaß am anderen Ende mit der unteren Kammer in Verbindung steht.

Mit einer derartigen Ausbildung der Leitung als flache Hohlkammer, die sich praktisch über die gesamte Fläche der Zwischenplatte erstrecken kann, kann innerhalb dieser Leitung eine erheblich größere Flüssigkeitsmenge eingeschlossen werden, ohne daß sich dadurch der Strömungswiderstand ändert gegenüber einem Kanal mit kreisförmigem Querschnitt und einem mehrfach kleineren Kanalvolumen.

Der Hohlraum selbst kann dabei in Aufsicht rechteckig oder auch angenähert oval oder kreisförmig ausgebildet sein.

Zur einfachen Herstellung ist es zweckmäßig, wenn die Zwischenplatte in ihrer horizontalen Mittelebene geteilt ist und jede Plattenhälfte in ihrer Trennfugenebene entsprechende deckungsgleiche Ausnehmungen zur Bildung des Hohlraumes sowie je einen Durchlaß aufweist. Die Durchlässe können dabei schlitzförmig ausgebildet sein und sich über die gesamte Breite des Hohlraumes erstrecken. Nach einer besonderen Ausführungsform können die Durchlässe auch in Aufsicht kreisabschnittförmigen Querschnitt aufweisen und mit ihrer kreisbogenförmigen Seite unmittelbar am Innenumfang der Lagerkammern anschließen.

Anhand einer schematischen Zeichnung sind Aufbau und Wirkungsweise von Ausführungsbeispielen nach der Erfindung näher erläutert. Dabei zeigen:

Fig. 1 einen Längsschnitt durch ein Zweikammer-Motorlager;

Fig. 2 einen Querschnitt durch dieses Lager entsprechend der Schnittlinie II-II nach Fig. 1 mit Blick auf die Zwischenplatte und

Fig. 3 einen Längsschnitt durch eine Zwischenplatte mit mäanderförmigem Hohlraum.

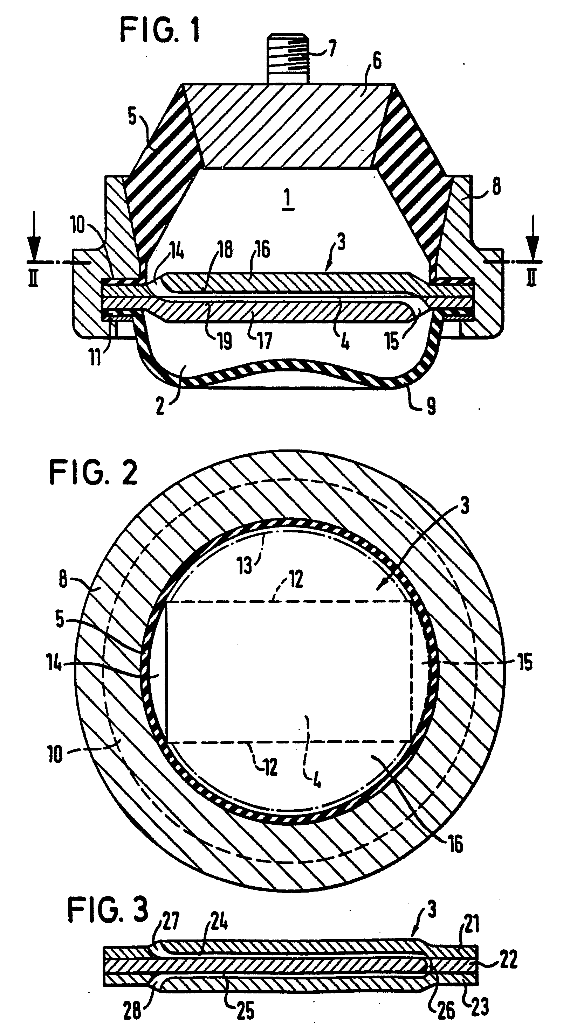

Wie aus Fig. 1 zu ersehen ist, besteht das Motorlager im wesentlichen aus einer oberen motorseitigen Kammer 1 und einer unteren Kammer 2, die durch eine in der noch zu beschreibenden Zwischenplatte 3 verlaufenden und als Hohlraum 4 ausgebildeten Leitung hydraulisch miteinander verbunden sind. Die obere Kammer 1 wird von einer starkwandigen, hohlkegelförmigen Kammerwandung 5 aus einem gummielastischen Material gebildet, die an der oberen Stirnseite von einer motorseitigen Lagerplatte 6 mit einem Haltebolzen 7 und im unteren Bereich mit dem Halteflansch - zum Anschluß an ein nicht näher dargestelltes Widerlager haftend verbunden ist. Die untere Kammer 2 wird von einer beispielsweise tassenförmigen Kammerwandung 9 aus ebenfalls gummielastischem, jedoch weicherem Material gebildet, die mit dem Flansch 8 haftend verbunden ist.

Beide Kammern 1 und 2 sind mit einer hydraulischen Flüssigkeit, im allgemeinen einer Mischung aus Glykol und Wasser gefüllt.

Die Zwischenplatte 3 ist in ihrem peripheren Bereich innerhalb des Halteflansches 8 durch die eingezogenen Gummiauskleidungen 10 und 11 elastisch gelagert, so daß sie bei vom zu lagernden Motor angeregten Schwingungen hoher Frequenz und kleiner Amplitude mitschwingen kann, ohne daß ein Flüssigkeitsaustausch zwischen den beiden Kammern 1 und 2 erfolgt. Dadurch ist eine gute akustische Isolierung gewährleistet, so daß eine Körperschallübertragung vom Motor auf die Fahrzeugkarosserie weitgehend unterbunden wird.

Beim Auftreten von Schwingungen mit größerer Amplitude und niedrigerer Frequenz erfolgt in der Kammer 1 ein dynamischer Druckaufbau, wodurch ein Flüssigkeitsübertritt von der Kammer 1 in die Kammer 2 über die Leitung 4 in der Zwischenplatte 3 initiiert wird.

Während dieses Flüssigkeitsübertritts erfolgt durch "Verschiebung" der in der Leitung 4 enthaltenen Flüssigkeitsmenge eine Dämpfung, die umso größer ist, je mehr Flüssigkeit verschoben werden muß und je größer der durch Schergefälle und Viskosität bestimmte Reibungsverlust ist. Die Leitung ist daher als innerhalb der Zwischenplatte 3 liegender flacher Hohlraum 4 mit in Längsrichtung angenähert rechteckigem Querschnitt ausgebildet, wobei dieser Hohlraum 4 - entsprechend der Aufsicht nach Fig. 2 - eine rechteckige Kontur aufweisen kann, wie sie durch die gestrichelte Linie 12 angedeutet ist. Länge und Breite des Hohlraumes 4 betragen dabei ein mehrfaches seiner Höhe, so daß eine große Flüssigkeitsmenge aufgenommen werden kann. Die flächenmäßige Ausdehnung des Hohlraumes 4 in horizontaler Richtung ist dabei allein durch die virksame Fläche der Zwischenplatte 3 bestimmt, so daß die maximale Außenkontur des Hohlraumes 4 auch kreisförmig etwa entsprechend der strichpunktierten Linie 13 in Figur 2 verlaufen kann.

Der Hohlraum 4 steht dabei über einen vertikalen und schlitzförmig ausgebildeten Durchlaß 14 mit der oberen Kammer 1 und über einen entsprechenden Durchlaß 15 mit der unteren Kammer 2 in Verbindung. Diese Durchlässe 14 und 15 sind zweckmäßigerweise am äußeren Bereich des Hohlraums 4 angeordnet, so daß zwischen ihnen ein möglichst großes Flüssigkeitsvolumen eingeschlossen wird und können nach dem dargestellten Ausführungsbeispiel kreisabschnittförmigen Querschnitt aufweisen und unmittelbar an die Innenkontur der Kammern 1 und 2 anschließen.

Zur einfachen Herstellung ist - wie insbesondere aus Fig. 1 zu ersehen - die Zwischenplatte 3 in ihrer horizontalen Mittelebene in eine obere Plattenhälfte 16 und eine untere Plattenhälfte 17 geteilt, wobei jede Plattenhälfte 16 bzw. 17 in ihrer Trennfugenebene entsprechende deckungsgleiche Ausnehmungen 18 bzw. 19 zur Bildung des Hohlraumes 4 im zusammengesetzten Zustand aufweist. In die obere Plattenhälfte 16 ist ferner noch der obere Durchlaß 14 und in die untere Plattenhälfte 17 der untere Durchlaß 15 eingeschnitten.

Durch diese Ausbildung der Verbindungsleitung als flache Hohlkammer läßt sich gegenüber den bisher üblichen Kanälen mit kreisförmigem Querschnitt bei gleichem Strömungswiderstand eine erheblich größere Flüssigkeitsmasse speichern. Außerdem kann das Volumen des Hohlraumes in sehr weiten Grenzen durch Vergrößerung der Fläche und/oder der Höhe variieren, so daß in weiten Grenzen eine Optimierung der Dämpfung und eine Abstimmung auf die entsprechenden Frequenzen möglich ist.

Eine weitere Möglichkeit zur Vergrößerung des Volumens des Hohlraumes besteht in einer mäanderförmigen Ausbildung desselben, wie das in Fig. 3 dargestellt ist. Danach ist die Zwischenplatte aus drei Einzelplatten 21, 22 und 23 zusammengesetzt, wobei zwischen den Platten 21 und 22 der Teilhohlraum 24 und zwischen den Platten 22 und 23 der Teilhohlraum 25 durch entsprechende Ausnehmungen in den Platten gebildet ist. Die beiden Teilhohlräume 24 und 25 stehen an einem Ende über den die mittlere Platte 22 durchsetzenden Kanal 26 miteinander und am anderen Ende über den Durchlaß 27 in der oberen Platte 21 mit der Lagerkammer 1 und über den Durchlaß 28 in der unteren Platte 23 mit der Lagerkammer 2 in Verbindung.

Selbstverständlich ist es auch möglich, durch Übereinanderstapeln von mehr als drei Platten und Vergrößerung der Mäanderwindungen das Volumen des Hohlraumes in der Zwischenplatte weiter zu erhöhen, um dadurch eine noch bessere Anpassung an die geforderten Bedingungen zu erreichen.

**Patentansprüche**

1. Zweikammer-Motorlager mit hydraulischer Dämpfung, insbesondere für Kraftfahrzeuge, dessen flüssigkeitsgefüllte und gummielastische Umfangswände (5, 9) aufweisende Kammern (1, 2) über eine in einer starren, elastischgelagerten Zwischenplatte (3) vorgesehenen Leitung miteinander verbunden sind, dadurch gekennzeichnet, daß die Zwischenplatte (3) im Bereich ihrer Mittelebene einen langgestreckten Hohlraum (4) angenähert rechteckigen Längsschnittes aufweist, dessen Länge und Breite ein vielfaches seiner Höhe beträgt, und der über einen vertikalen Durchlass (14) an einem Ende mit der oberen Kammer (1) und über einen entsprechenden Durchlaß (15) am anderen Ende mit der unteren Kammer (2) in Verbindung steht.

2. Zweikammer-Motorlager nach Anspruch 1, dadurch gekennzeichnet, daß der Hohlraum (4) in Aufsicht rechteckig ausgebildet ist.

3. Zweikammer-Motorlager nach Anspruch 1, dadurch gekennzeichnet, daß der Hohlraum (4) in Aufsicht angenähert oval oder kreisförmig ausgebildet ist.

4. Zweikammer-Motorlager nach einem der Ansprüche 1 - 3, dadurch gekennzeichnet, daß die Zwischenplatte (3) in ihrer horizontalen Mittelebene geteilt ist und jede Plattenhälfte (16, 17) in ihrer Trennfugenebene entsprechende deckungsgleiche Ausnehmungen (18, 19) zur Bildung des Hohlraumes (4) sowie je einen Durchlaß (14; 15) aufweist.

5. Zweikammer-Motorlager nach Anspruch 3, dadurch gekennzeichnet, daß die Durchlässe (14, 15) schlitzförmig ausgebildet sind und sich über die gesamte Breite des Hohlraumes (4) erstrecken.

6. Zweikammer-Motorlager nach einem der Ansprüche 1 - 4, dadurch gekennzeichnet, daß die Durchlässe (14, 15) in Aufsicht kreisabschnittförmigen Querschnitt aufweisen und mit ihrer kreisbogenförmigen Seite unmittelbar am Innenumfang der Lagerkammern (1, 2) anschließen.

7. Zweikammer-Motorlager nach Anspruch 1,

dadurch gekennzeichnet, ꞏaß der Hohlraum mäanderförmig mit mehreren übereinanderliegenden Teilhohlräumen (24, 25) ausgebildet ist, die abwechselnd an einem Ende miteinander bzw. mit den Lagerkammern (1, 2) verbunden sind.

8. Zweikammer-Motorlager nach Anspruch 7, dadurch gekennzeichnet, ꞏaß die Zwischenplatte (3) aus mindestens drei Einzelplatten (21, 22, 23) besteht, in deren einander zugewandte Oberflächen jeweils ein Teilhohlraum (24, 25) eingelassen sind, die an einem Ende über einen senkrechten, die mittlere Einzelplatte (22) durchsetzenden Kanal (26) miteinander und am anderen Ende über senkrechte Durchlässe (27, 28) mit den Lagerkammern (1, 2) in Verbindung stehen.

## Claims

1. Twin-chamber motor bearing with hydraulic damping, in particular for motor vehicles, whose chambers (1, 2) comprising fluid-filled and elastic rubber surrounding walls (59) are connected through a passage provided in a rigid elastically mounted dividing plate (3), characterised in the dividing plate (3) comprises in the region of its central plane an elongated hollow space (4) of approximately rectangular longitudinal section, whose length and breadth are many times greater than its height, and which is in connection with the upper chamber (1) through a vertical passage (14) at one end and with the lower chamber through a corresponding passage (15) at the other end.

2. Twin-chamber motor bearing according to claim 1, characterised in that the hollow space (4) is designed as a rectangle in top view.

3. Twin-chamber motor bearing according to claim 1, characterised in that the hollow space (4) is designed to be oval or circular in top view.

4. Twin-chamber motor bearing according to one of claims 1-3, characterised in that the dividing plate (3) is separated in its horizontal central plane and each plate half (16, 17) comprises in its mould seam plane congruent recesses (18, 19) for forming the hollow space (4), and one passage (14, 15).

5. Twin-chamber motor bearing according to claim 3, characterised in that the passages (14, 15) are designed in the shape of slits and extend across the complete width of the hollow space.

6. Twin-chamber motor bearing according to one of claims 1-4, characterised in that the passages (14, 15) comprise a cross-section of the shape of segment of a circle and connect directly at their circular arcshaped side to the inner perimeter of the bearing chambers (1, 2).

7. Twin-chamber motor bearing according to claim 1, characterised in that the hollow space is designed to be serpentine in shape with several partial hollow spaces (24, 25) lying on top of each other, which are alternately connected at one end with each other and with the bearing chambers (1, 2) respectively.

8. Twin-chamber motor bearing according to claim 7, characterised in that the dividing plate (3) consists of at least three individual plates (21, 22, 23) in whose surfaces facing each other in each case one partial hollow space (24, 25) is let in, which partial hollow spaces are connected with each other at one end by a vertical channel (26) running through the central individual plate (22), and which are connected with the bearing chambers (1, 2) at the other end through vertical passages (27, 28).

## Revendications

1. Support de moteur à amortissement hydraulique et comportant deux chambres, notamment pour des véhicules automobiles, dont les chambres (1, 2) emplies de liquide et ayant des parois périphériques (5, 9) et possédant l'élasticité du caoutchouc, communiquent entre elles par un conduit ménagé dans une plaque intermédiaire (3), rigide et montée élastiquement, caractérisé en ce que la plaque intermédiaire (3) comprend, dans la région de son plan médian, une cavité oblongue (4) de section longitudinale sensiblement rectangulaire, et dont la longueur et la largeur sont des multiples de la hauteur et qui communique, par un passage vertical (14) à l'une des extrémités, avec la chambre supérieure (1) et, par un passage correspondant (15) à l'autre extrémité, avec la chambre inférieure (2).

2. Support de moteur comportant deux chambres suivant la revendication 1, caractérisé en ce que la cavité (4) est rectangulaire en vue en élévation.

3. Support de moteur comportant deux chambres suivant la revendication 1, caractérisé en ce que la cavité (4) est sensiblement ovale ou circulaire, en vue en élévation.

4. Support de moteur comportant deux chambres suivant l'une des revendications 1 à 3, caractérisé en ce que la plaque intermédiaire (3) est subdivisée dans son plan médian horizontal et chaque moitié de la plaque (16, 17) comporte, dans son plan de joint, des évidements (18, 19) correspondants en coïncidence pour former la cavité (4), ainsi que respectivement un passage (14, 15).

5. Support de moteur comportant deux chambres suivant la revendication 3, caractérisé en ce que les passages (14, 15) sont en forme de fente et s'étendent sur toute la largeur de la cavité (4).

6. Support de moteur suivant l'une des revendications 1 à 4, caractérisé en ce que les passages (14, 15) ont, en vue en élévation, une section transversale en forme de secteur de cercle et se raccordent, par leur côté en forme d'arc de cercle, directement au pourtour intérieur des chambres (1, 2) du support.

7. Support de moteur comportant deux chambres suivant la revendication 1, caractérisé en ce que la cavité est sinueuse, en étant constituée de plusieurs cavités partielles superposées (24, 25), qui communiquent aux extrémités alternativement entre elles et avec les chambres (1, 2) du support.

8. Support de moteur comportant deux chambres suivant la revendication 7, caractérisé en ce que la plaque intermédiaire (3) est constituée d'au moins trois plaques individuelles (21, 22, 23), dans les surfaces tournées l'une vers l'autre desquelles sont ménagées les cavités partielles (24, 25) qui communiquent entre elles à une extrémité, par l'intermédiaire d'un canal vertical traversant la plaque individuelle intermédiaire (22), et à l'autre extrémité, avec les chambres (1, 2) du support par l'intermédiaire de passages verticaux (27, 28).

FIG. 1

FIG. 2

FIG. 3